Europäisches Patentamt

European Patent Office

Office européen des brevets

(19)

(11) Numéro de publication : **0 352 184 B1**

(12) **FASCICULE DE BREVET EUROPEEN**

(45) Date de publication du fascicule du brevet :
**15.07.92 Bulletin 92/29**

(21) Numéro de dépôt : **89402042.9**

(22) Date de dépôt : **18.07.89**

(51) Int. Cl.⁵ : **B60G 15/06**

(54) Dispositif supérieur de liaison articulée entre un ensemble ressort-amortisseur et le châssis d'un véhicule automobile.

(30) Priorité : **20.07.88 FR 8809821**

(43) Date de publication de la demande :
**24.01.90 Bulletin 90/04**

(45) Mention de la délivrance du brevet :
**15.07.92 Bulletin 92/29**

(84) Etats contractants désignés :
**CH DE ES GB IT LI**

(56) Documents cités :
**EP-A- 0 063 016**
**EP-A- 0 160 276**
**EP-A- 0 268 393**
**FR-A- 2 364 777**
**FR-A- 2 536 135**
**US-A- 4 465 296**
**US-A- 4 486 028**
**US-A- 4 673 192**

(56) Documents cités :
**PATENT ABSTRACTS OF JAPAN, vol. 11, no. 597 (M-655)[2844], 25 décembre 1987, page 77 M 655; & JP-A-62 163 811 (TOYOTAMOTOR CORP.) 20-07-1987**
**PATENT ABSTRACTS OF JAPAN, vol. 12, no. 18 (M-660)[2865], 20 janvier 1988; & JP-A-62 178 410 (NISSAN MOTOR CO., LTD)05-08-1987**
**PATENT ABSTRACTS OF JAPAN, vol. 7, no. 29 (M-191)[1174], 5 février 1983, page 35 M 191; & JP-A-57 182 503 (KINUGAWA GOMUKOGYO K.K.) 10-11-1982**

(73) Titulaire : **HUTCHINSON**
**2 rue Balzac**
**F-75008 Paris (FR)**

(72) Inventeur : **Cothenet, Didier**
**9, Rue de Moresville Flacey**
**F-28800 Bonneval (FR)**

(74) Mandataire : **Picard, Jean-Claude Georges et al**
**Cabinet Plasseraud 84, rue d'Amsterdam**
**F-75009 Paris (FR)**

**Description**

La présente invention concerne un dispositif supérieur de liaison articulée entre un ensemble ressort-amortisseur et le châssis d'un véhicule automobile, notamment pour le train des roues directrices, du type à deux étages, à savoir un étage à faibles rigidités dit "filtrant" et un étage à fortes rigidités permettant de limiter les débattements, comportant une armature intérieure centrale pourvue d'un moyen d'assujettissement de l'extrémité supérieure de l'amortisseur, une armature extérieure solidarisée dudit châssis et portant à sa face inférieure un garnissage d'appui du ressort de suspension et fermée vers le haut par un capot, et une ceinture à forte rigidité solidarisée de la partie supérieure de ladite armature intérieure centrale, et portant deux surfaces de butée axiale, l'une propre à venir en appui sur le fond dudit capot, l'autre sur un rebord périphérique d'un appui annulaire solidaire de l'armature extérieure. Un tel dispositif est connu du document US-A- 4 465 296.

Le but premier de la présente invention est d'obtenir pour les petits déplacements autour du point d'articulation une faible rigidité axiale dans les deux directions (compression ou extension de l'ensemble ressort-amortisseur), et une faible rigidité radiale ; et, pour les déplacements importants (au-delà d'un seuil prédéterminé), une forte rigidité axiale également dans les deux directions, ainsi qu'une forte rigidité radiale.

Pour les déplacements en conique au-delà d'un seuil également prédéterminé, la rigidité, selon un but secondaire de l'invention, devra être forte dans une direction et faible dans la direction perpendiculaire à la précédente, et ceci même pour les grands débattements angulaires de l'amortisseur. En principe, la forte rigidité en conique devra être obtenue dans la direction transversale du véhicule et la faible rigidité par conséquent dans la direction longitudinale de celui-ci.

Ainsi on voit que l'invention concerne un dispositif de liaison articulée ayant pour but d'intégrer plusieurs fonctions assez diverses dans un même organe.

Il conviendra en outre d'obtenir un bon découplage entre les faibles rigidités autour du point d'articulation et les fortes rigidités pour les grands débattements.

Selon la présente invention, ces fonctions, ainsi que d'autres qui seront vues par la suite, sont obtenues par un dispositif du type décrit plus haut et caractérisé en ce qu'il comporte une rotule ceinturant ladite armature intérieure centrale, une bague à faible rigidité assujettie entre la partie inférieure de ladite rotule et ledit appui annulaire, et en ce que la surface périphérique extérieure de ladite ceinture à forte rigidité s'étend au repos à faible distance de la surface périphérique interne dudit capot.

Grâce à ces dispositions, on comprend que les faibles rigidités dans les directions indiquées plus haut seront obtenues grâce à la bague de faible rigidité qui est fixée entre la partie inférieure de la rotule et l'appui annulaire solidaire de l'armature extérieure.

Au-delà d'un certain seuil fixé pour les débattements axiaux dans les deux directions par ailleurs, la forte rigidité sera assurée par les deux surfaces de butée axiale, la forte rigidité en compression étant assurée à partir du moment où la surface supérieure de la ceinture viendra buter contre le fond du capot, et la forte rigidité dans la direction d'extension ou de rebond étant assurée au-delà d'un débattement prédéterminé à partir du moment où la surface inférieure de ladite ceinture viendra buter contre le rebord périphérique de l'appui annulaire qui est solidaire de l'armature extérieure.

D'autres avantages et fonctions de la présente invention, notamment l'obtention d'une forte rigidité conique dans une direction, au-delà d'un débattement prédéterminé, et d'une faible rigidité conique dans la direction perpendiculaire à la précédente, même pour les grands débattements, apparaîtront mieux à la lecture de l'exemple de réalisation qui va maintenant être décrit avec référence aux figures du dessin annexé dans lequel :

– la figure 1 est une vue en coupe axiale d'un dispositif supérieur de liaison articulée conforme à l'invention, selon une direction transversale à l'axe du véhicule, le ressort et l'amortisseur n'étant pas représentés ;

– la figure 2 est une double vue partielle de la partie supérieure du dispositif, en coupes axiales selon deux plans perpendiculaires définis par les lignes A-A de la figure 3 ;

– la figure 3 est une vue de dessus de la partie supérieure représentée à la figure 2 ;

– la figure 4 est une vue en coupes axiale et transversale plus schématique du dispositif des figures précédentes, la moitié droite de la figure représentant une mise en butée axiale au rebond (en extension) et la partie gauche représentant une mise en butée axiale au choc (en compression) ;

– la figure 5 est une vue plus schématique analogue à celle de la figure 4 et montrant un déplacement radial vers la gauche, amenant la périphérie de la ceinture à forte rigidité en appui sur la surface périphérique interne du capot ; et

– la figure 6 est une vue en coupe longitudinale schématique du dispositif conforme à l'invention, montrant la conservation de la faible rigidité conique pour de forts déplacements angulaires selon un plan longitudinal.

Sur les différentes figures, on a référencé en 1 et 2 deux coupelles opposées, solidarisées par leurs fonds grâce à une pièce de liaison 3 et constituant ensemble ce que l'on a appelé plus haut l'armature intérieure centrale, ladite pièce de liaison 3 constituant également le moyen d'assujettissement de l'extrémité supérieure de l'amortisseur (non représenté). L'armature intérieure centrale 1, 2, 3 ainsi constituée est ceinturée par une rotule 4, laquelle peut être réalisée en alliage léger ou en matière plastique, tandis que les coupelles 1 et 2 constituant l'armature centrale peuvent être réalisées en tôle d'acier. Conformément à une disposition préférable de l'invention, le moyen d'assujettissement 3 est situé à un niveau inférieur à celui du centre de rotation de la rotule précitée 4. La position de ce centre, qui est celui (théorique) autour duquel s'articule en réalité l'amortisseur, permet de conférer à celui-ci une longueur fictive plus grande que sa longueur réelle, ce qui a pour effet d'améliorer la cinématique du train de roulement.

Le dispositif comporte par ailleurs, comme indiqué plus haut, une armature extérieure référencée en 5, qui peut être réalisée également en tôle d'acier, qui est en forme de coupelle ouverte vers le bas et qui comporte intérieurement un garnissage 6 en caoutchouc ou en matière élastomère pour l'appui du ressort de suspension (également non représenté). La surface d'appui de ce ressort est référencée en 7. Cette armature extérieure 5 est complétée vers le haut et fermée par un capot 8, également en tôle d'acier ou éventuellement en matière plastique rigide, et solidarisé par son bord extérieur 9 à l'armature extérieure 5, par exemple par soudage de ce bord au fond d'une gorge 10 périphérique que comporte cette dernière armature.

Une bague à faible rigidité 11, qui peut être également en élastomère et qui peut comporter une gorge périphérique 12, est adhérisée entre la partie inférieure de la rotule 4 et un appui annulaire 13 solidaire de l'armature extérieure 5. Comme on le voit sur les dessins, cet appui annulaire 13 est constitué par un puits cylindrique constituant une ouverture centrale de l'armature 5. On conçoit que c'est la présence à cet emplacement de la bague 11 à faible rigidité qui permettra, dans les limites de débattements bien déterminées, la liaison articulée à faible rigidité entre l'ensemble ressort-amortisseur et le châssis du véhicule, dont sera solidarisée l'armature extérieure 5.

Cette bague 11 fait également office de joint d'étanchéité en protégeant la partie supérieure à forte rigidité du dispositif contre toute pollution pouvant provenir du train de roulement et qui pourrait conduire à une réduction du jeu fonctionnel.

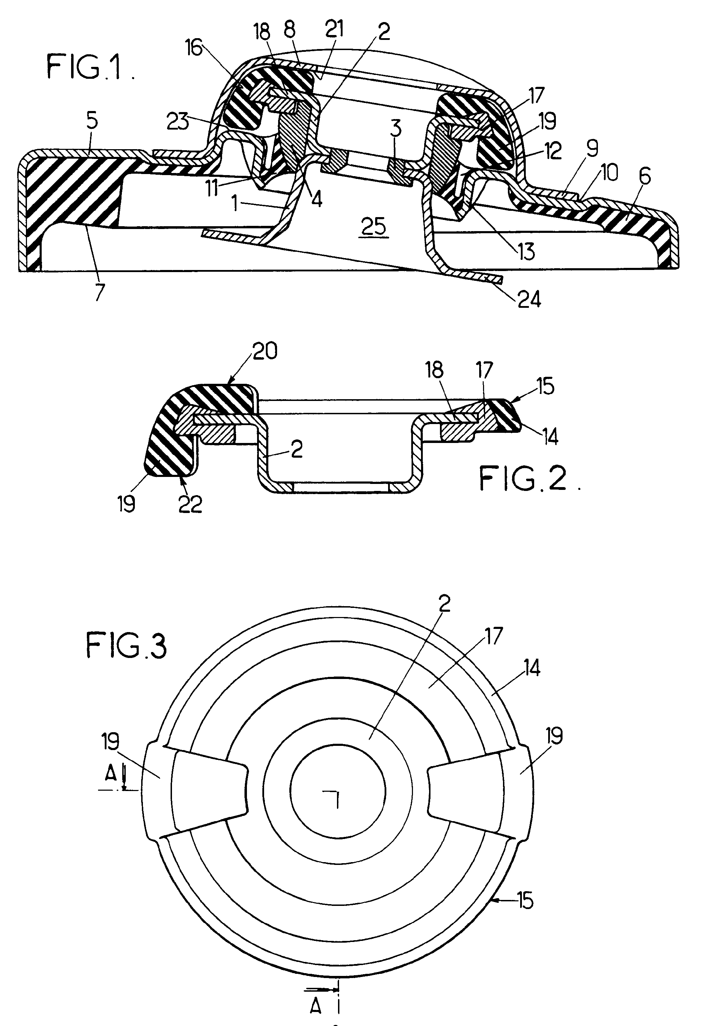

Pour assurer la forte rigidité de cette liaison articulée et les mises en butée lorsque les débattements à faible rigidité seront dépassés, le dispositif comporte par ailleurs essentiellement une ceinture à forte rigidité 14 en caoutchouc (voir par exemple les figures 2 et 3), dont la surface périphérique extérieure 15 s'étend à faible distance de la surface périphérique interne 16 du capot 8, ce qui assure la forte rigidité radiale pour les débattements importants (voir la partie gauche de la figure 5). Cette ceinture 14 est assujettie par tous moyens appropriés sur une masse d'enrobage 17 en matière plastique (ou en alliage léger) qui est surmoulée sur un rebord périphérique 18 que comporte la coupelle supérieure 2 de l'armature intérieure centrale. La forme de cette masse d'enrobage est déterminée en fonction des caractéristiques de rigidité définies par le cahier des charges.

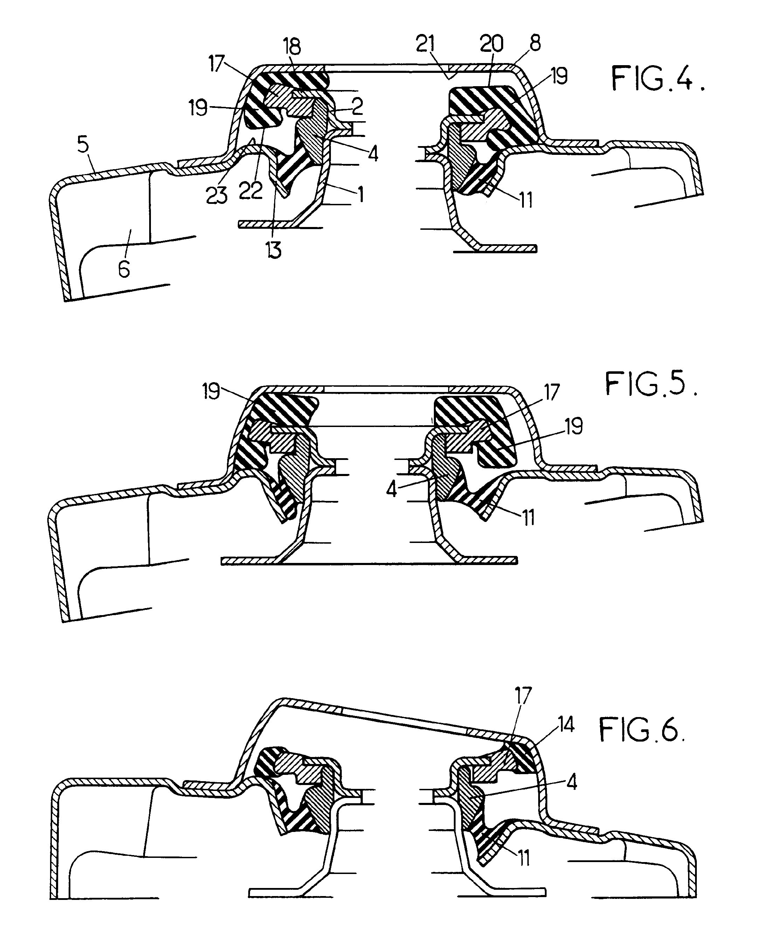

Comme indiqué plus haut, la ceinture 14 porte deux surfaces de butée axiale, l'une propre à venir en appui sur le fond 21 dudit capot, l'autre sur un rebord périphérique 23 dudit appui annulaire 13. Ces surfaces sont portées par deux pavés 19 diamétralement opposés dans le plan transversal du véhicule, comme visible en particulier sur les figures 1 et 3, et qui font partie intégrante de la ceinture 14. Ces deux pavés 19 viennent axialement en saillie de part et d'autre de la partie restante de cette ceinture 14. Leur surface supérieure 20 constitue ainsi l'une des surfaces de butée axiale, propre à venir en appui sur le fond 21 du capot 8 lorsque le débattement de compression (choc) de l'ensemble ressort-amortisseur a dépassé la valeur prédéterminée (voir la partie gauche de la figure 4).

De même, les pavés 19 présentent par ailleurs une surface de butée axiale inférieure 22, laquelle est propre à venir en appui sur un rebord périphérique 23 que comporte l'appui annulaire précité 13. Cette mise en butée permet alors l'obtention de la forte rigidité au rebond, c'est-à-dire lorsque l'extension de l'ensemble ressort-amortisseur dépasse l'amplitude prédéterminée (voir la partie droite de la figure 4).

Ces deux pavés 19 diamétralement opposés ont une faible amplitude angulaire, comme visible à la figure 3, ce qui permet de leur conférer supplémentairement le rôle d'assurer une forte rigidité pour les débattements en conique au-delà d'une amplitude angulaire déterminée dans le plan transversal, tout en conservant au dispositif une très faible rigidité angulaire dans le plan perpendiculaire au précédent, à savoir le plan longitudinal qui est celui de la figure 6.

Ceci étant, on conçoit que c'est le jeu entre les surfaces 15-16, 20-21 et 22-23 qui déterminera le point de découplage entre les fonctions "faibles rigidités" et "fortes rigidités" du dispositif qui vient d'être décrit.

Enfin, il y a lieu de noter que la coupelle inférieure 1 permet de réaliser les fonctions "appui de la butée de choc" (24), "logement du soufflet d'amortisseur" (25) et "arrêt de sécurité de l'amortisseur", en cas de destruction de la butée de choc.

**Revendications**

1. Dispositif supérieur de liaison articulée entre un ensemble ressort-amortisseur et le châssis d'un véhicule automobile, notamment pour le train des roues directrices, du type à deux étages, à savoir un étage filtrant à faibles rigidités et un étage à fortes rigidités permettant de limiter les débattements, comportant une armature intérieure centrale (1,2,3) pourvue d'un moyen d'assujettissement (3) de l'extrémité supérieure de l'amortisseur, une armature extérieure (5) solidarisée dudit châssis et portant à sa face inférieure un garnissage (6) d'appui du ressort de suspension et fermée vers le haut par un capot (8), et une ceinture à forte rigidité (14) solidarisée de la partie supérieure de ladite armature intérieure centrale (1, 2, 3), et portant deux surfaces (20, 22) de butée axiale, l'une propre à venir en appui sur le fond (21) dudit capot, l'autre sur un rebord périphérique (23) d'un appui annulaire (13) solidaire de l'armature extérieure (5), caractérisé en ce qu'il comporte une rotule (4) ceinturant ladite armature intérieure centrale (1, 2, 3), une bague (11) à faible rigidité assujettie entre la partie inférieure de ladite rotule (4) et ledit appui annulaire (13), et en ce que la surface périphérique extérieure (15) de ladite ceinture à forte rigidité (14) s'étend au repos à faible distance de la surface périphérique interne (16) dudit capot (8).

2. Dispositif selon la revendication 1, caractérisé en ce que ladite armature intérieure centrale est constituée de deux coupelles (1, 2) solidarisées par leurs fonds grâce à une pièce de liaison (3) constituant également ledit moyen d'assujettissement de l'extrémité supérieure de l'amortisseur, et en ce que ce moyen d'assujettissement (3) est situé à un niveau inférieur à celui du centre de rotation de ladite rotule (4).

3. Dispositif selon la revendication 2, caractérisé en ce que la coupelle supérieure (2) de ladite armature intérieure centrale (1,2) comporte un rebord périphérique (18) propre à assurer la fixation de ladite ceinture (14) à forte rigidité.

4. Dispositif selon la revendication 3, caractérisé en ce que ladite ceinture (14) à forte rigidité est assujettie sur une masse d'enrobage (17) périphérique surmoulée sur ledit rebord (18) de la coupelle supérieure (2).

5. Dispositif selon l'une quelconque des revendications précédentes, caractérisé en ce que lesdites deux surfaces (20,22) de butée axiale de ladite ceinture (14) à forte rigidité sont portées par deux pavés (19) de faible amplitude angulaire et diamétralement opposés dans le plan transversal, ces deux pavés (19) venant axialement en saillie de part et d'autre de la partie restante de ladite ceinture (14).

**Patentansprüche**

1. Obere Gelenkverbindung zwischen einer Feder-Dämpfer-Einheit und dem Rahmen eines Kraftfahrzeugs, insbesondere für die gelenkten Räder, mit zwei Stufen, nämlich einer "filtrierenden" Stufe mit geringer Steifigkeit und einer Stufe mit hoher Steifigkeit, die eine Begrenzung der Schwingungen ermöglicht, bestehend aus einer inneren mittleren Armatur (1, 2, 3), die mit einer Einrichtung (3) zum Befestigen des oberen Endes des Dämpfers versehen ist, einer äußeren Armatur (5), die mit dem Chassis verbunden ist, auf ihrer Innenseite ein Futter (6) zum Abstützen der Aufhängefeder trägt und nach oben zu durch eine Abdeckung (8) verschlossen ist und einem Gurt (14) mit hoher Steifigkeit, der an dem oberen Teil der inneren mittleren Armatur (1, 2, 3) befestigt ist und zwei Oberflächen (20, 22) mit axialen Anlageflächen enthält, von denen sich eine an dem Boden (21) der Abdeckung und die andere an einem nach außen umgebogenen Rand (23) einer ringförmigen Abstützung (13), die mit der äußeren Armatur (5) fest verbunden ist, abstützen kann, dadurch gekennzeichnet, daß die Gelenkverbindung ein Gelenklager (4), das die innere mittlere Armatur (1, 2, 3) umgibt und einen Ring (11) mit geringer Steifigkeit enthält, der zwischen dem unteren Abschnitt des Lagers (4) und der ringförmigen Abstützung (13) befestigt ist, und daß die äußere Umfangsfläche (15) des Gurtes (14) mit hoher Steifigkeit sich im Ruhezustand in geringem Abstand von der inneren Umfangsoberfläche (16) der Abdeckung (8) erstreckt.

2. Gelenkverbindung nach Anspruch 1, dadurch gekennzeichnet, daß die innere mittlere Armatur aus zwei Schalen (1, 2) besteht, deren Böden mittels eines Verbindungsstückes (3) miteinander verbunden sind, das gleichzeitig die Einrichtung zum Abstützen des oberen Endes des Dämpfers bildet, und daß die Einrichtung (3) auf einem niedrigeren Niveau liegt als der Drehungsmittelpunkt des Lagers (4).

3. Gelenkverbindung nach Anspruch 2, dadurch gekennzeichnet, daß die obere Schale (2) der unteren mittleren Armatur (1, 2) eine umlaufende, umgebogene Randleiste (18) zur Befestigung des Gurtes (14) mit hoher Steifigkeit enthält.

4. Gelenkverbindung nach Anspruch 3, dadurch gekennzeichnet, daß der Gurt (14) mit hoher Steifigkeit an einer umlaufenden Umhüllungsmasse (17) angebracht ist, die an die Leiste (18) der oberen Schale (2) angeformt ist.

5. Gelenkverbindung nach einem der vorhergehenden Ansprüche, dadurch gekennzeichnet, daß die beiden axialen Anlageflächen (20, 22) des Gurtes (14) mit hoher Steifigkeit an zwei Kopfstücken (19) mit geringer winkliger Ausdehnung ausgebildet sind, die sich in der Querebene diametral gegenüberliegen, wobei die beiden Kopfstücke (19) in axialer Richtung auf beiden Seiten gegenüber den restlichen Abschnitten des Gurtes (14) überstehen.

**Claims**

1. Upper articulated connecting device between a spring-shock absorber assembly and the chassis of a motor vehicle, this device being intended in particular for steering wheel trains, and of the two stage type, namely a low rigidity so-called "filtering" stage and a high rigidity stage for limiting the free movements, comprising a central internal frame (1, 2, 3) having a means (3) for securing the upper end of the shock absorber, an external frame (5) fixed on said chassis and carrying on its lower face a lining (6) on which the suspension spring bears and which is closed at the top by a cover (8), and a high rigidity girdle (14) fixed on the upper part of the inner central frame, this girdle (14) having two axial abutment surfaces (20, 22), one adapted to bear against the bottom (21) of said cover, the other against a peripheral flange (23) of an annular bearing surface (13) fixed on said external frame, characterized in that it comprises a swivel joint (4) surrounding the said inner central frame, a low rigidity ring (11), secured between the lower portion of said swivel joint (4) and said annular bearing surface (13), and in that the external peripheral surface (15) of said high rigidity girdle (14) extends at a short distance from the internal peripheral surface (16) of said cover (8).

2. Device according to claim 1, characterized in that said central internal frame is formed of two cups (1,2) joined together at their bottoms by a connecting piece (3) also forming said means for securing the upper end of the shock absorber, and in that this securing means (3) is situated at a level lower than that of the centre of rotation of said swivel joint (4).

3. Device according to claim 2, characterized in that the upper cup (2) of said central internal frame (1, 2) comprises a peripheral flange (18) adapted for fixing said high rigidity girdle (14).

4. Device according to claim 3, characterized in that said high rigidity girdle (14) is secured to a peripheral coating mass (17) moulded over said flange (18) of the upper cup (2).

5. Device according to any one of the preceeding claims, characterized in that said two axial abutment surfaces (20, 22) of said high rigidity girdle (14) are carried by two slabs (19) of low angular amplitude and opposed diametrically in the transverse plane, these two slabs (19) projecting axially on each side of the remaining portion of said girdle (14).

FIG.1.

FIG.2.

FIG.3.

FIG.4.

FIG.5.

FIG.6.